# EUROPEAN PATENT APPLICATION

(11) **EP 4 624 438 A1**
(43) Date of publication of application: **01.10.2025**
(21) Application number: 24167050.4
(22) Date of filing: 27.03.2024
(51) Int. Cl.: C04B 28/02, C04B 28/04, C04B 111/21

(54) **SEMI-DRY MINERAL BINDER COMPOSITIONS**

(71) Applicant: Sika Technology AG, 6340 Baar (CH)
(72) Inventor: MÜLLER, Thomas, 69207 Sandhausen (DE); UNSELD, Johannes Otto, 38678 Clausthal-Zellerfeld (DE)
(74) Representative: Sika Patent Attorneys

(57) **Abstract**

A semi-dry mineral binder composition comprising: a) a mineral binder, b) water, c) a siliceous material whereby the siliceous material is a material capable of reversibly absorbing and/or releasing water in a mineral binder composition, and, optionally, d) aggregates and/or further additives.

## Description

### Technical field

The invention is concerned with a semi-dry mineral binder composition comprising: a mineral binder, water, a siliceous material, and, optionally, aggregates and/or further additives. A further aspect of the invention is related to a method for producing a semi-dry mineral binder composition and a molded body, especially a paver, obtainable by hardening the semi-dry mineral composition.

### Background art

Mineral binder compositions are widely used for various construction work. For proper processing and hardening as well as to obtain desired properties of products made from such compositions, formulations of the mineral binder compositions must be carefully adapted to the respective requirements.

For example, the water to cement ratio needs to be adjusted such that a desired viscosity or workability is obtained. However, the content of water not only affects the viscosity or workability of the mineral binder composition during processing but also the hardening process and the final strength of the hardened mineral binder composition. To better control workability and final properties of the mineral binder compositions, it is common practice to make use of so-called plasticizers or water-reducing agents. These are chemical admixtures used in mineral binder compositions, e.g. concrete and mortar mixtures, to reduce the amount of water needed while maintaining the desired workability and performance. By incorporating plasticizers, such as e.g. polycarboxylates or lignosulfonates, several benefits, including improved strength, durability, and workability of the mineral binder composition can be achieved.

Especially, with semi-dry concrete, the water content is an important issue. Semi-dry concrete typically refers to a concrete mix that has a water content between that of dry-mix concrete and conventional wet-mix concrete. This results in a mix that is more workable than dry concrete but not as fluid as traditional wet concrete. The specific characteristics of semi-dry concrete can vary depending on the intended application and the materials used in the mix. This type of concrete often is used in situations where a compromise between the ease of placement, shape retention during hardening and the strength of the final product is desirable.

Semi-dry concrete is commonly used (i) for the construction of pavements, roads, and other flatwork where a level surface is required; (ii) in the production of precast concrete elements such as blocks, paving stones, or other shaped products. Thereby semi-dry concrete can offer the necessary workability for molding and demolding; (iii) for constructing retaining walls, columns, or other structural elements where a balance between workability and stiffness is crucial; (iv) for architectural elements that require a specific surface finish and detailing, whereby the semi-dry concrete allows for more control over the final appearance; (v) for repairing or resurfacing existing structures, and (vi) the production of precast concrete pipes, whereby semi-dry mixes ensure proper compaction and shape retention during the curing process.

However, in situations where a slightly higher water content is required to exploit the full potential of the mineral binder with respect to strength development, stickiness of the concrete mixture can increase which in turn can result in so-called stamp adhesion. Stamp adhesion means the adhesion of the fresh concrete mixture to the surface of compaction tools used for pressing the concrete mixture into formwork or molds. To avoid this, the water content usually is reduced, resulting, however, in a lower final strength due to an unequal distribution and insufficient proportion of water.

Also, it is known to use superabsorbers to reduce the water content in mineral binder compositions. However, the acrylic acid usually contained in the superabsorber quickly starts to make the concrete stickier again. In addition, various superabsorbents are not stable enough to survive the mixing process in semi-dry concrete.

Another issue with mineral binder compositions is efflorescence. Efflorescence refers to the white, powdery substance that can form on the surface of mineral binder based materials, such as concrete, brick, or stone. It is caused by the migration of soluble salts to the surface of these materials and their subsequent crystallization. This phenomenon typically occurs during the hardening process when water carrying dissolved salts moves through the mineral binder composition and reaches the surface. When the water evaporates, it leaves the salts behind, creating the characteristic white deposits.

Preventing efflorescence involves addressing the underlying moisture issues, such as improving drainage, using waterproofing techniques, or ensuring proper curing of the concrete. Up to now, hydrophobizing agents have been widely used to reduce efflorescence on mineral binder surfaces. However, these are relatively expensive additives. Also, it is known to add industrially produced granulated blast furnace slag or reprocessed steelworks slag for reducing efflorescence. However, apart from their limited effectiveness for preventing efflorescence, these slags have to be finely ground before use, which requires a lot of energy, especially in the case of granulated blast furnace slag.

Furthermore, if products made of mineral binder compositions are used under harsh climate conditions, freeze-thaw stability is an important property. In this regard, it is for example know to add freeze-thaw admixtures such as e.g. air entrainers that create microscopic air voids in the concrete mix, which act as pressure relievers during freeze-thaw cycles. However, such admixtures may affect other properties of the mineral binder compositions, or they are poorly compatible with further admixture.

Although there are many admixtures available on the market that allow for adjusting desired properties of mineral binder compositions and mitigation adverse or undesired effects, there is still a need for develop improved solutions, which have fewer or no such problems.

### Disclosure of the invention

It is an object of the present invention to provide improved solutions, which allow for better controlling the properties of mineral binder composition with respect to processing, setting and/or in the hardened state of such compositions. Especially, solutions should be provided that allow for an improved production of products made of the semi-dry mineral binder compositions, especially semi dry concrete. Also, the solution desirably should allow for reducing adverse effects related to efflorescence and/or for improving freeze thaw stability. The solution should be as flexible and eco-friendly as possible and easy to implement.

Surprisingly, it was found that these objects can be achieved by a semi-dry mineral binder composition comprising: a) a mineral binder, b) water, c) a siliceous material whereby the siliceous material is a material capable of reversibly absorbing and/or releasing water in a mineral binder composition, and, optionally, d) aggregates and/or further additives. Likewise, these objects can be achieved by using a siliceous material as an admixture for a semi-dry mineral binder composition, whereby the siliceous material is a material capable of reversibly absorbing and/or releasing water in a mineral binder composition.

Further aspects of the invention are the subject matter of other independent claims. Especially preferred embodiments of the invention are the subject matter of the dependent claims and described in the description below.

As it turned out, the siliceous materials according to the invention can be used to control the proportion of free water in the semi-dry mineral binder composition. Especially, the proportion of free water can be reduced during the mixing phase of the mineral binder composition.

Specifically, the siliceous material can absorb large amounts of water and/or oil and also release them again if required. This makes them especially interesting for producing semi-dry mineral binder compositions, in particular semi dry-mortar or concrete.

In the field of paving stone production with semi-dry mineral binder compositions, for example, a reduction of free water during production is particularly desirable in order to achieve better pourability. Also, by adding the siliceous material, the right amount of water can be ensured without stamp adhesion and/or sticking in mold. Nevertheless, the water absorbed in the siliceous material can be released into the mineral binder composition as the hydration of the binder progresses and is available for further hydration of the mineral binder resulting in retaining or even increasing the strength in the hardened state of the mineral binder composition.

Furthermore, the siliceous material can be used to replace a certain proportion of mineral binder, e.g. cement, without negatively affecting the strength development of the semi-dry mineral binder composition.

Also the siliceous material is capable of reducing or preventing efflorescence in semi-dry mineral binder compositions in an efficient manner.

A further advantage is that the siliceous material can be used for introducing air voids into the mineral binder composition. Thereby, the freeze-thaw stability of the semi-dry mineral binder composition in hardened state can be improved. Freeze-thaw stability is for example measured according to standard SIA 262-1 appendix C.

Without wishing to be bound by theory, it is believed that the siliceous material during the hardening process is at least partly converted by released calcium hydroxide in the mineral binder composition to further strength producing calcium-silicate-hydrate (CSH) phases. This further improves the strength of the hardened mineral binder, reduces a concentration of free calcium ions giving rises to a lowered efflorescence and also leads to the formation of air voids resulting in an improved freeze-thaw stability.

Since siliceous materials are available from natural sources without need of energy intensive treatment, significant CO₂ savings are possible. Especially, if the siliceous material is used as a partial replacement for mineral binder, the CO₂ savings become even more pronounced. As a further beneficial aspect, when reducing the cement proportion in the semi-dry mineral binder composition, cost savings are possible as well.

Furthermore, siliceous materials tuned out to be compatible with most known admixtures that are commonly used in mineral binder compositions.

### Ways of carrying out the invention

A first aspect of the invention relates to a semi-dry mineral binder composition comprising: a) a mineral binder, b) water, c) a siliceous material whereby the siliceous material is a material capable of reversibly absorbing and/or releasing water in a mineral binder composition, and, optionally, d) aggregates and/or further additives.

The siliceous material for example is a porous siliceous material and/or amorphous siliceous material, especially a porous amorphous siliceous material. For example, the siliceous material is selected from silicic acid, amorphous silica, a xerogel, an aerogel, a zeolite, precipitated silica, silica gel and/or diatomaceous earth. Such kind of siliceous materials are capable of reversibly absorbing and/or releasing water in a mineral binder composition. Also, they can withstand rather harsh chemical and physical conditions present during the mixing and processing of semi-dry mineral binder compositions.

In particular, with respect to an overall weight of the siliceous material, it preferably comprises at least 50 wt.%, especially at least 70 wt.%, of silicon dioxide, especially amorphous silicon dioxide.

Preferably, the siliceous material is a particulate material, especially having an average particle size in the range of 0.5 - 1'000 µm, preferably 1 - 300 µm, more preferably 1 - 200 µm, especially 10 - 200 µm.

The term "particle size" refers in the present document to the area-equivalent spherical diameter of a particle. The particle size distribution can be measured by laser diffraction according to the method as described in standard ISO 13320:2009. A Mastersizer 2000 device (trademark of Malvern Instruments Ltd, GB) can be used in measuring particle size distribution. Average particle size here corresponds in particular to the D50 parameter (50% of the particles are smaller than the specified value, 50% are larger).

Especially, the siliceous material, with respect to its own weight, has a water absorption capacity of at least 20 wt.%, especially at least 30 wt.%, especially at least 40 wt.%, in particular at least 50 wt.%. For example the water absorption capacity is in the range of 20 - 500 wt.% or 40 - 200 wt.%. In particular, the water capacity is measured in water vapor-saturated air at a temperature of 25°C and atmospheric pressure.

According to a highly preferred embodiment, the siliceous material comprises or consists of diatomaceous earth.

Diatomaceous earth is composed of the fossilized remains of diatoms, which are microscopic, single-celled algae with a hard, silica-based outer shell. The diatoms extract silica from water to build their protective exoskeletons, and when they die, their skeletons accumulate to form deposits of diatomaceous earth. The composition of diatomaceous earth can vary, but it is typically high in silica and may also contain other minerals and/or impurities.

In particular, the diatomaceous earth is natural diatomaceous earth, e.g. obtained from sedimentary rocks. Especially, the diatomaceous earth is a non-calcined diatomaceous earth.

Thus, diatomaceous earth can be obtained as a natural product that is readily available, inexpensive and therefore constitutes a sustainable and environmentally friendly solution. Furthermore, with diatomaceous earth, the above-mentioned advantages are achieved to a greater extent. Without wishing to be bound by the theory, it is assumed that diatomaceous earth features a highly suitable water absorption capacity as well as beneficial chemical and physical properties with respect to the use according to the invention.

In particular, the siliceous material, especially the diatomaceous earth, with respect to the weight of the siliceous material, comprises at least 70 wt.% silicon dioxide, especially 80 - 90 wt.% silicon dioxide, and optionally one or more other mineral materials, especially alumina and/or iron oxide.

Further preferred, the siliceous material, especially the diatomaceous earth, with respect to the weight of the siliceous material, comprises 80 - 90 wt.%, especially 80 - 85 wt.%, silicon dioxide, and 1 - 15 wt.%, especially 3 - 10 wt.% alumina; and optionally 0.5 - 5 wt.%, in particular 1 - 3 wt.% iron oxide and/or 0.05 - 3 wt.%, especially 0.1 - 2 wt.%, calcium oxide.

Especially a loss on ignition of the siliceous material, especially the diatomaceous earth, is from 0.1 - 10 wt.%, especially 1 - 8 wt.%, in particular 3 - 7 wt.%. The term "loss of ignition" refers to a mass loss in a sample heated to 95 °C, especially measured according to standard ASTM D7348-21.

Such loss on ignition is typical for natural and/or non-calcined siliceous materials, especially diatomaceous earths.

The term "mineral binder" denotes a binder which reacts in the presence of water in a hydration reaction to form solid hydrates or hydrate phases. This can be, for example, a hydraulic binder, a latent hydraulic binder, and/or a pozzolanic binder. Highly preferred are hydraulic binders. Hydraulic binders can set underwater. But it can also be advantageous for the mineral binder to contain other binders in addition to or instead of a hydraulic binder. These are, in particular, latent hydraulic binders and/or pozzolanic binders. Suitable latent hydraulic and/or pozzolanic binders are, e.g., slag, fly ash, silica dust and/or natural pozzolans.

A "mineral binder composition" is meant to be a composition comprising at least a mineral binder and optionally further components.

The mineral binder in the mineral binder composition in particular comprises or consists of cement, especially cement of type CEM I, CEM II, CEM III, CEM IV and/or CEM V, according to the standard EN 197-1:2011, or CEM II/C, CEM VI according to standard EN 197-5:2021-07.

As it turned out, the inventive solution is in particular effective with these kinds of mineral binders.

In one preferred embodiment, with respect to the overall mineral binder content, the mineral binder contains at least 5 wt.-%, especially at least 20 wt.-%, preferably at least 35 wt.-%, especially at least 65 wt.-%, of hydraulic binder, especially cement, and, optionally, 5 to 95 wt.-%, especially 5 to 65 wt.-%, particularly 15 to 35 wt.-%, of latent hydraulic and/or pozzolanic binder.

The semi-dry mineral binder composition furthermore may comprise aggregates. The term "aggregates" includes any type of mortar and/or concrete aggregates. In particular, the aggregates feature a density of 2.2 - 3 kg/dm³.

Especially, the aggregates, if present, include stone, gravel, sand powdered quartz, and/or limestone. However the aggregates may comprise or consist of lightweight aggregates, in particular foamed clay or polystyrene, or heavy aggregates, such as barite, iron ore and the like.

In particular, a grain size of the aggregates is at least 0.125 mm or at least 0.250 mm.

Preferably, the grain size of the aggregates at most 125 mm or at most 32 mm.

Especially, the grain size of the aggregates is >0 - 125 mm, especially from 0.125 - 32 mm, in particular from 0.125 - 16 mm, for example from 0.125 - 8 mm or from 0.125 - 5 mm.

Within the present context, the grain size is determined by sieve analysis, in particular with sieves featuring square openings. Especially, the grain size is expressed by the opening size of the test sieves just passed by the grains or particles concerned.

Additionally, the mineral binder composition may comprise a further additive, especially selected from additives conventionally used in mortar or concrete compositions. Especially, the further additive is selected from surfactants, plasticizers, accelerators, corrosion inhibitors, retarders, shrinkage reducers, antifoams, and/or foam-formers. Thereby, the further additive is chemically and/or physically different from the siliceous material.

A proportion of the further additive, with respect to the mineral binder, in particular is from 0.0001 - 10 wt.-%, especially 0.001 - 5 wt.%, in particular 0.01 - 2 wt.-%, for example 0.05 - 0.5 wt.%.

Especially, the semi-dry mineral binder composition is an earth-moist mineral binder composition. An earth-moist mineral binder composition is a mineral binder composition having a consistency with just sufficient liquid to allow compaction, as for example defined in standard DIN EN 13318:2000-12, chapter 5.1.

Preferably, the semi-dry mineral binder composition has a slump of 0 - 60 mm, especially 5 - 45 mm, particularly 10 - 40 mm or 15 - 30 mm, and/or the semi-dry mineral binder composition is of slump class S1 or S2, in particular S1. Especially, the slump is measured according to standard DIN EN 12350-2:2019.

Especially, the mineral binder composition is a semi-dry grout, semi-dry mortar, semi-dry concrete, or a semi-dry composition for producing a paver.

For preparing the mineral binder composition, mixing water is added.

Since the siliceous material is a material capable of reversibly absorbing and/or releasing water in a mineral binder composition, it may affect the apparent water to cement ratio in the mineral binder composition. Specifically, the apparent water to cement ratio only considers free water that is not absorbed by the siliceous material. In contrast, the effective water to cement ratio considers free water as well as the water releasable from the siliceous material. Therefore, by using the siliceous material according to the invention, mineral binder compositions with a desired viscosity and/or workability can be produced, especially having an apparently lower content of water, whereby stickiness or stamp adhesion is less an issue. Nevertheless, as hydration progresses, water absorbed in the siliceous material can be released and becomes available for a more complete hydration of the mineral binder.

Especially, the water to cement ratio of the mineral binder composition preferably is in the range of 0.35 - 0.5, especially 0.35 - 0.45, especially 0.38 - 0.42, particularly 0.39 - 0.41 or 0.4. Especially, water to cement ratio is meant to be the effective water to cement ratio, which calculated based on the mixing water added to the mineral binder composition upon mixing the mineral binder composition.

In particular an apparent water to cement ratio of the mineral binder composition, is in the range of 0.3 - 0.4, especially 0.32 - 0.38. The apparent water to cement ratio in particular is determined after adding the siliceous material to the mineral binder composition and mixing the mineral binder composition. In particular, a proportion of the siliceous material is chosen to obtain such an apparent water to cement ratio.

Especially, an apparent water to cement ratio of the mineral binder composition is 5 - 25%, especially 10 - 15%, smaller than the (effective) water to cement ratio.

In particular, with respect to the weight of the mineral binder and the aggregates in the composition, the mineral binder composition comprises 10 - 35 wt.%, especially 15 - 23 wt.% of mineral binder, especially cement, and 65 - 90 wt.%, especially 77 - 85 wt.%, of aggregates, especially sand and/or gravel.

The siliceous material, in particular diatomaceous earth, preferably is used in a proportion of 0.1 - 20 wt.%, especially 0.2 - 10 wt.%, in particular 0.3 - 5 wt.%, with respect to the weight of the mineral binder.

According to another preferred embodiment, the siliceous material is used in combination with a surfactant and/or a plasticizer or the semi-dry mineral binder composition comprises such additives. This allows for controlling the processing properties and/or properties of the mineral binder composition in cured state. Thereby, the siliceous material and the surfactant and/or a plasticizer may functionally interact with each other. This is in particular helpful with respect to paving stone production.

Suitable surfactants are non-ionic, anionic, cationic, zwitterionic, and amphiphilic compounds as well as proteins or mixtures thereof. Particularly suitable are C8-C18-alkyl sulfates, C8-C18-alkyl ether sulfates, C8-C18-alkyl sulfonates, C8-C18-alkyl benzene sulfonates, C8-C18-α-olefin sulfonates, C8-C18-sulfosuccinates, α-sulfo-C8-C18-fatty acid salts, C8-C18-fatty acid salts, C8-C18-fatty alcohol ethoxylates, block copolymers of ethylene oxide and propylene oxide, C8-C18-alkyl polyglycosides, alkyltriammonium salts, alkylbenzyldimethylammonium salts, alkylpyridinium salts, cocamidopropyl betaine, lauramidopropyl betaine, keratin, hydrolyzed keratin, collagen, hydrolyzed collagen, or soy-based proteins.

Preferably, the surfactant and/or a plasticizer is selected from the group consisting of lignosulfonates, naphthalene sulfonates, melamine sulfonates, polycarboxylate ethers, ethoxylated fatty acid alcohols with 8 - 32 carbon atoms and 3-25 ethylene oxide units, fatty acids as well as their sulfonates and/or sulfates, or mixtures thereof. However, other surfactants and/or a plasticizer might be suitable as well.

In particular, a proportion of the surfactant and/or the plasticizer, with respect to the mineral binder, is from 0.0001 - 10 wt.-%, especially 0.001 - 5 wt.%, in particular 0.01 - 2 wt.-%, for example 0.05 - 0.5 wt.%.

For example, a preferred semi-dry composition, with respect to the overall weight of the composition, comprises:
- 15 - 21 wt.% mineral binder, especially cement;
- 70 - 78 wt.% aggregates, especially sand;
- 5-10 wt.%, especially 6 - 8 wt.%, water;
- 0.1 - 0.5 wt.% additives, especially surfactants and/or plasticizers;
- 0.1 - 7 wt.%, preferably 0.1 - 5 wt.-%, more preferably 0.3 - 1 wt.% siliceous material, especially diatomaceous earth.

Thereby, preferably, the water to cement ratio is 0.38 - 0.42, especially 0.39 - 0.41 or 0.4.

Such a composition for example is suitable for producing precast elements, such as e.g. kerbs or pavers.

A second aspect of the invention is directed to a method for producing a semi-dry mineral binder composition as described above, comprising the step of mixing a siliceous material as described above with a mineral binder, water and optionally with aggregates and/or further additives.

Thereby, in particular, the siliceous material, the semi-dry mineral binder composition, the mineral binder, water proportions and optionally the aggregates and/or further additives are defined as described above. Features described above as preferred are also realized in preferred embodiments of the method.

Preferably, upon mixing, water is added with a water to cement ratio in the range of 0.35 - 0.5, especially 0.35 - 0.45, especially 0.38 - 0.42, particularly 0.39 - 0.41,e.g. 0.4.

According to a preferred embodiment, the so produced semi-dry mineral binder composition is placed in a mold and, preferably, the semi-dry mineral binder composition is compacted, especially by pressing with a stamp.

Thereby, preferably, a precast element is produced. For example, the precast element is a wall, a ceiling a floor, a tile, a kerb or a paver.

In another preferred embodiment, the so produced semi-dry mineral binder composition is applied as a layer of a pavement.

A third aspect of the invention is directed an admixture for a semi-dry mineral binder composition comprising a siliceous material capable of reversibly absorbing and/or releasing water in a mineral binder composition.

A fourth aspect of the present invention is directed to the use of the admixture as described above and/or of a siliceous material, capable of reversibly absorbing and/or releasing water in a mineral binder composition, as an admixture for a semi-dry mineral binder composition.

It was found that the admixture and/or the siliceous material is a highly versatile admixture that can be used for various purposes in a targeted manner. Especially, the admixture and/or the siliceous material, in particular the diatomaceous earth, is used for the following purposes:
- as an internal reservoir for water in the mineral binder composition, especially for absorbing and/or releasing water in the mineral binder composition; and/or
- for reducing the apparent water to binder ratio; and/or
- for reducing the apparent water to cement ratio while retaining the (effective) water content of the mineral binder composition; and/or
- for reducing efflorescence of the mineral binder composition; and/or
- as an internal curing agent; and/or
- for reducing the water to binder ratio while retaining or improving the strength of the mineral binder composition, especially the compressive strength, in hardened state, in particular 28 days after mixing the mineral binder composition; and/or
- for increasing the strength, especially the compressive strength, of the mineral binder composition; and/or
- for increasing a viscosity of the mineral binder composition; and/or
- for improving the freeze-thaw stability of the mineral binder composition and/or for introducing air voids in the mineral binder composition.

In the present context, the strength, especially the compressive strength, is measured according to EN 12390-1 to 12390-4:2021. As a reference, a similar mineral binder composition is taken, which does not comprise the siliceous material but otherwise is identical in composition.

With respect to the admixture and the uses described above, in particular, the siliceous material and the semi-dry mineral binder composition are defined as described above in connection with the composition and methods according to the invention. Furthermore, features described above as preferred are also realized in preferred admixtures or uses of the siliceous material.

A further aspect of the present invention is related to a molded body, especially a paver, obtainable by hardening a semi-dry mineral binder composition as described above or by a method as described above or by use as described above.

Thereby, in particular, the molded body is a precast element. For example a wall, a ceiling, a floor, a tile, a kerb or a paver. Also, the molded body can be a layer of a pavement.

Further advantageous implementations of the invention are evident from the exemplary embodiments.

### Exemplary embodiments

In an exemplary embodiment, a semi-dry mineral binder composition for producing a paver was prepared as indicated in table 1 by mixing the components in a concrete mixer.

**Table 1**

| *Component* | *Proportion*/*Property* |
|---|---|
| Mineral binder (CEM I) | 400 kg/m³ |
| Aggregates (Sand 0-4 mm) | 1'650 kg/m³ |
| Plasticizer¹⁾ | 0.2 wt.% |
| Diatomaceous earth²⁾ | 0.3 wt.% |
| Water | 160 kg/m³ |
| Water to cement (w/c) | 0.4 |
| Consistency class³⁾ | S1 |

| | |
|---|---|
| ¹⁾ Polycarboxylate-based superplasticizer (wt.% with respect to mineral binder) ²⁾ 83.7 wt.% silicon dioxide, 5.6 wt.% alumina, 23 wt.% iron oxide, 0.9 wt.% calcium oxide; loss on ignition: 5 wt.% (wt.% with respect to mineral binder) ³⁾ According to EN 12350-2:2019 | |

The so produced semi-dry mineral binder composition then was placed in a mold of a paver and compacted with a compaction tool. Thereby, no stamp adhesion was observed and there were no problems observed with respect to sticking in the mold.

For reasons of comparison, a second semi-dry mineral binder composition was produced. Apart from the fact that the second composition did not comprise any diatomaceous earth, it was essentially identical in composition. Thereby, a significantly higher fluidity of the composition and stamp adhesion at the compaction tool were observed. However, with respect to the final strength of the hardened compositions, no significant difference could be observed.

Also, efflorescence was much less an issue with the composition according to the invention when compared with the reference composition and polished cut cross-sections of the hardened compositions revealed a significant number of air voids in the composition according to the invention, which is beneficial for freeze-thaw stability. In contrast, the reference composition did comprise much less and smaller air voids.

For reasons of comparison, a third semi-dry mineral binder composition was produced. Apart from the fact that in the third composition the diatomaceous earth was replaced by a superabsorbent polymer, it was essentially identical in composition. Although the superabsorbent polymer was capable of reducing the apparent water to cement ratio, the composition quickly became stickier resulting in stamp adhesion and sticking to the mold. This might be due to the acrylic acid comprised in the superabsorbent polymer. Also, the superabsorbent polymers have proven to be less stable during the relatively harsh mixing conditions prevailing when preparing semi-dry mineral binder compositions. Therefore, the effect of the superabsorbent polymers strongly depends on the mixing conditions.

These results clearly show that the siliceous material according to the invention is a highly beneficial admixture that is capable of reducing the apparent water to cement ratio, preventing problems with efflorescence, improving the freeze-thaw stability in semi-dry mineral binder compositions and reducing problems with stamp adhesion and demolding.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

1. A semi-dry mineral binder composition comprising: a) a mineral binder, b) water, c) a siliceous material whereby the siliceous material is a material capable of reversibly absorbing and/or releasing water in a mineral binder composition, and, optionally, d) aggregates and/or further additives.

2. The composition according to claim 1, whereby the siliceous material is an amorphous and porous particulate material having an average particle size in the range of 0.5 - 1'000 µm, preferably 1 - 300 µm, more preferably 1 - 200 µm, especially 10 - 200 µm; whereby, preferably, the siliceous material is selected from silicic acid, amorphous silica, a xerogel, an aerogel, a zeolite, precipitated silica, silica gel and/or diatomaceous earth.

3. The composition according to any of preceding claims, whereby the siliceous material is diatomaceous earth.

4. The composition according to any of preceding claims, whereby the siliceous material, especially the diatomaceous earth, with respect to the weight of the siliceous material, comprises 80 - 90 wt.%, especially 80 - 85 wt.%, silicon dioxide, and 1 - 15 wt.%, especially 3 - 10 wt.% alumina; and optionally 0.5 - 5 wt.%, in particular 1 - 3 wt.% iron oxide and/or 0.05 - 3 wt.%, especially 0.1 - 2 wt.% calcium oxide.

5. The composition according to any of preceding claims, whereby the semi-dry mineral binder composition has a slump of 0 - 60 mm, especially 5 - 45 mm, particularly 10 - 40 mm or 15 - 30 mm, when measured according to standard EN 12350-2:2019.

6. The composition according to any of preceding claims, whereby a water to cement ratio of the mineral binder composition is in the range of 0.35 - 0.45, especially 0.39 - 0.42, e.g. 0.4.

7. The composition according to any of preceding claims, whereby the composition comprises aggregates, especially sand and/or gravel, and, with respect to the weight of the mineral binder and the aggregates in the composition, the mineral binder composition comprises 10 - 35 wt.%, especially 15 - 23 wt.% of mineral binder, especially cement, and 65 - 90 wt.%, especially 77 - 85 wt.%, of the aggregates.

8. The composition according to any of preceding claims, whereby the siliceous material has a proportion of 0.1 - 20 wt.%, especially 0.2 - 10 wt.%, in particular 0.3 - 5 wt.%, with respect to the weight of the mineral binder.

9. The composition according to any of preceding claims, whereby the composition comprises a surfactant and/or a plasticizer, especially selected from the group consisting of lignosulfonates, naphthalene sulfonates, melamine sulfonates, polycarboxylate ethers, ethoxylated fatty acid alcohols with 8 - 32 carbon atoms and 3-25 ethylene oxide units, fatty acids as well as their sulfonates and/or sulfates.

10. A Method for producing a semi-dry mineral binder composition according to any of preceding claims, comprising the step of mixing a siliceous material as defined in any of preceding claims with a mineral binder, water and optionally with aggregates and/or further additives.

11. A method for producing a precast element, especially a kerb or a paver, comprising the steps of (i) producing a semi-dry mineral binder composition according to claim 10, (ii) placing the semi-dry mineral binder composition in a mold and (iii) compacting the semi-dry mineral binder composition in the mold, especially by pressing with a stamp.

12. A molded body, especially a paver, obtainable by hardening a semi-dry mineral binder composition according to any of claims 1 - 9 or by a method according to any of claims 10- 11.

13. Admixture for a semi-dry mineral binder composition comprising a siliceous material capable of reversibly absorbing and/or releasing water in a mineral binder composition.

14. Use of the admixture according to claim 13 for reducing efflorescence of the mineral binder composition.

15. Use of the admixture according to claim 13 for reducing the apparent water to binder ratio, and, preferably, for retaining or improving the strength of the mineral binder composition in hardened state.

16. Use of the admixture according to claim 13 for improving the freeze-thaw stability of the mineral binder composition and/or for introducing air voids in the mineral binder composition.
